(19) Europäisches Patentamt
European Patent Office
Office européen des brevets

(11) **EP 2 189 348 A1**

(12) **DEMANDE DE BREVET EUROPEEN**

(43) Date de publication:
26.05.2010 Bulletin 2010/21

(51) Int Cl.:
*B60W 40/10* (2006.01)　　*B60T 8/48* (2006.01)

(21) Numéro de dépôt: **09174015.9**

(22) Date de dépôt: **26.10.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **03.11.2008 FR 0806122**

(71) Demandeur: **VALEO VISION**
**93012 Bobigny (FR)**

(72) Inventeur: **Groult, Xavier**
**95470, SURVILLIERS (FR)**

(54) **Procédé d'assistance à la conduite pour véhicule automobile**

(57) L'invention concerne un procédé d'assistance à la conduite pour véhicule automobile. Elle se **caractérise en ce que** le procédé comporte les étapes de :
- détecter un obstacle se trouvant dans un environnement du véhicule automobile ;
- calculer la pente d'une route sur laquelle le véhicule automobile est apte à circuler ;
- en fonction de la pente de la route calculée, déterminer une vitesse limite au-delà de laquelle le véhicule automobile touche ledit obstacle ; et
- si un obstacle est détecté, réduire automatiquement la vitesse du véhicule automobile lorsqu'elle est supérieure à ladite vitesse limite.

CDP1 = BT_ON & Vit<Vitd1

SIGN(CDP2) — 0

DETECT_O — 1

DETECT_TR(O) — 2

CALC_S — 3

CALC_VITLIM(S) — 4

CALC_VITR(Dm) — 5

DECR_VIT(VitLIM, O)　RQ
BRAK_V(2WH, 4WH) — 6

ALERT(CDS, CDD) — 7

**Fig. 1**

EP 2 189 348 A1

**Description**

La présente invention concerne un procédé d'assistance à la conduite pour véhicule automobile, et un dispositif d'assistance permettant de mettre en oeuvre ledit procédé.

Elle trouve une application particulière dans le domaine des véhicules automobiles.

Dans le domaine des véhicules automobiles, un état de la technique antérieur connu de procédé d'assistance à la conduite pour véhicule automobile est utilisé lorsqu'un conducteur du véhicule automobile veut se garer. Il est donc déclenché à des vitesses très faibles, en général de 2 à 3 km/h. Il permet d'éviter de heurter un obstacle lors d'une manoeuvre pour se garer. Un tel procédé est couramment appelé «en anglais « Park Assist ». Un inconvénient de cet état de la technique est qu'il ne fonctionne que pour des situations de stationnement, puisqu'au dessus de ces vitesses très faibles, le procédé d'assistance à la manoeuvre de garage n'est pas déclenché et donc ne fonctionne pas.

Le risque est que si la vitesse du véhicule est au-dessus de la vitesse de déclenchement du procédé d'assistance, le conducteur ne s'en aperçoive pas et se repose malgré tout sur le système d'assistance à la conduite. Dans ce cas, même en voyant l'obstacle, le conducteur ne freinera pas, pensant que le système le fera à sa place. Cependant le système d'assistance n'étant pas activé, celui-ci n'assistera pas le conducteur, et l'obstacle sera percuté à pleine vitesse. Ainsi pour un système d'assistance au garage déclenché par exemple en dessous de 7 km/h, le système ne fonctionne que lorsque le véhicule circule en dessous de 7 km/h. Si le véhicule roule à 13 km/h, il y a peu de chance que le conducteur s'en aperçoive et en cas d'obstacle détecté, il ne freinera pas, pensant le système d'assistance est déclenché alors qu'il est désactivé.

La présente invention a pour but un procédé d'assistance à la conduite pour véhicule automobile, qui permet d'assister la conduite également dans des situations autres que du stationnement.

Selon un premier objet de l'invention, ce but est atteint par un procédé d'assistance à la conduite pour véhicule automobile comprenant les étapes de :

- détecter un obstacle se trouvant dans un environnement du véhicule automobile ;
- calculer la pente d'une route sur laquelle le véhicule automobile est apte à circuler ;
- en fonction de la pente de la route calculée, déterminer une vitesse limite jusqu'à laquelle l'assistance à la conduite est efficace, le véhicule automobile touchant ledit obstacle au-delà de cette vitesse limite ; et
- si un obstacle est détecté, réduire automatiquement la vitesse du véhicule automobile lorsqu'elle est supérieure à ladite vitesse limite.

Ainsi même lorsque la fonction d'assistance à la conduite n'est plus efficace, au sens où elle n'empêchera pas la collision, le procédé d'assistance selon l'invention sera néanmoins déclenché, c'est-à-dire activé, et pourra donc malgré tout commander un freinage du véhicule. La vitesse du véhicule sera donc malgré tout diminuée avant l'impact, réduisant ainsi les dommages.

Le procédé selon l'invention peut être employé dans des situations où la vitesse est plus élevée que celles habituellement utilisées lors de manoeuvre de garage, soit parce que le conducteur n'est pas en train de se garer, soit parce qu'il a dépassé ces vitesses sans s'en apercevoir.

Comme on va le voir en détail par la suite, le fait de prendre en compte la pente de la route comme paramètre pour ensuite réduire la vitesse du véhicule automobile, et de réduire cette vitesse lorsqu'elle est supérieure à la vitesse limite, va permettre d'effectuer cette réduction de façon précise et de limiter les effets d'un choc avec un obstacle se situant sur la route lorsque le véhicule automobile heurte cet obstacle.

Il n'est pas nécessaire de prendre en compte la distance du véhicule à l'obstacle. En effet, dans le cas d'obstacles fixes, il est déjà possible de définir, pour une pente donnée et sans action du conducteur sur les pédales de frein ou d'accélérateur, une valeur limite de vitesse au-dessus de laquelle dès qu'un véhicule est détecté le système est incapable de freiner complètement le véhicule.

Selon des modes de réalisation non limitatifs, le procédé présente en outre une ou plusieurs des caractéristiques suivantes.

- Le procédé d'assistance selon l'invention fonctionne lorsque la vitesse du véhicule automobile est comprise entre 7 et 20 km/h. Cet intervalle correspond à des vitesses faibles mais supérieures aux vitesses habituellement utilisées pour garer un véhicule.
- Le procédé d'assistance selon l'invention réduit la vitesse du véhicule sans permettre l'arrêt du véhicule avant l'obstacle.
- Le procédé d'assistance selon l'invention déclenche le freinage maximum lorsque la vitesse du véhicule automobile est supérieure à la vitesse limite. Ceci permet de gagner du temps en n'imposant pas au système une modulation du freinage. La modulation du freinage présente peu d'intérêt, puisque de toute façon l'impact va avoir lieu. Il est donc préférable de freiner le plus possible.

- Les étapes sont exécutées si des premières conditions préalables sont remplies. Cela permet d'éviter de rendre disponible ladite fonction d'assistance quand on sait pertinemment qu'elle ne pourra pas fonctionner.
- La détection d'un obstacle s'effectue au moyen de capteurs de détection à ultrasons. L'avantage de tels capteurs est leur large cône de détection, leur faible coût et leur omniprésence dans le domaine automobile. Ces capteurs ont souvent une distance de détection limitée, le plus souvent entre 2 et 3 mètres. On peut plus facilement ne pas prendre en compte la distance du véhicule à l'obstacle ; à partir du moment où un obstacle est détecté la distance est de 2 à 3 mètres ; on peut déjà définir un seuil de vitesse au-dessus duquel il y aura impact.
- Le système peut prendre également en compte la distance à l'objet détecté pour définir la vitesse limite. Cela permet d'ajuster la définition de la vitesse limite.
- Le procédé comporte en outre une étape supplémentaire de déterminer si l'obstacle détecté se situe sur la trajectoire du véhicule automobile. Cela évite d'activer l'assistance à la conduite dans le cas contraire. En effet, lorsque l'obstacle n'est pas sur la trajectoire du véhicule automobile, il y a très peu de risque de heurter cet obstacle. Donc il n'est pas nécessaire d'activer une fonction d'assistance à la conduite.
- Le procédé comporte en outre une étape supplémentaire de calculer une vitesse relative du véhicule automobile par rapport à l'obstacle détecté. Cela permet de vérifier si le véhicule automobile se rapproche d'un obstacle et de déclencher l'assistance à la conduite si nécessaire.
- La réduction automatique de la vitesse du véhicule automobile s'effectue par un freinage autonome. Cela évite au conducteur du véhicule automobile de freiner lui-même avec une pédale de frein.
- La réduction automatique de la vitesse du véhicule automobile comporte une sous-étape d'envoi d'une requête minimale de freinage pour accélérer un déclenchement du freinage. Cela permet d'améliorer le temps de réaction du freinage.
- Le freinage s'effectue sur deux ou quatre roues. Le freinage sur deux roues permet de limiter le bruit et les vibrations du véhicule automobile. Le freinage sur quatre roues permet d'avoir un freinage plus efficace.
- Le procédé comporte en outre une étape supplémentaire d'activer un témoin de disponibilité pour signaler qu'une fonction d'assistance à la conduite est disponible/indisponible. Cela permet d'indiquer à un conducteur du véhicule automobile quand l'assistance à la conduite est disponible.
- L'activation du témoin de disponibilité se fait en fonction de deuxièmes conditions préalables. Cela permet de responsabiliser le conducteur du véhicule automobile sur sa conduite.
- Le procédé comporte en outre une étape supplémentaire d'activer une fonction d'alerte qui génère un premier niveau d'alerte lorsque des conditions de sécurité sont atteintes. Cela prévient le conducteur du véhicule automobile que la réduction automatique de vitesse est en cours d'exécution mais qu'il y a un risque de heurter l'obstacle détecté sauf s'il freine avec sa pédale de frein.
- Le procédé comporte en outre une étape supplémentaire d'activer une fonction d'alerte qui génère un deuxième niveau d'alerte lorsque des conditions de dangerosité sont atteintes. Cela prévient le conducteur du véhicule automobile que la réduction automatique de vitesse est en cours d'exécution mais que le véhicule automobile va quand même heurter l'obstacle détecté.

Selon un deuxième objet de l'invention, elle concerne un dispositif d'assistance à la conduite pour véhicule automobile, **caractérisé en ce qu'**il comporte une unité de contrôle pour :

- détecter un obstacle se trouvant dans un environnement du véhicule automobile ;
- calculer la pente d'une route sur laquelle le véhicule automobile est apte à circuler ;
- en fonction de la pente de la route calculée, déterminer une vitesse limite au-delà de laquelle le véhicule automobile touche un obstacle , et
- si un obstacle est détecté, réduire automatiquement la vitesse du véhicule automobile lorsqu'elle est supérieure à ladite vitesse limite.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

D'autres caractéristiques et avantages de la présente invention seront mieux compris à l'aide de la description et des dessins non limitatifs parmi lesquels :

- la Fig. 1 représente un organigramme d'un mode de réalisation non limitatif du procédé d'assistance selon l'invention ;
- la Fig. 2 représente un premier diagramme d'une vitesse d'un véhicule automobile en fonction d'une pente d'une route sur laquelle circule le véhicule automobile, la pente étant utilisée dans le procédé de la Fig. 1 ;
- la Fig. 3 représente un deuxième diagramme d'une vitesse d'un véhicule automobile en fonction d'une pente d'une route sur laquelle circule le véhicule automobile, la pente étant utilisée dans le procédé de la Fig. 1 ;

- la Fig. 4 représente quatre états différents d'un véhicule automobile face à un obstacle en fonction de sa vitesse, vitesse réduite selon le procédé d'assistance de la Fig. 1 ; et
- la Fig. 5 illustre un mode de réalisation non limitatif d'un dispositif de mise en oeuvre du procédé de la Fig. 1 .

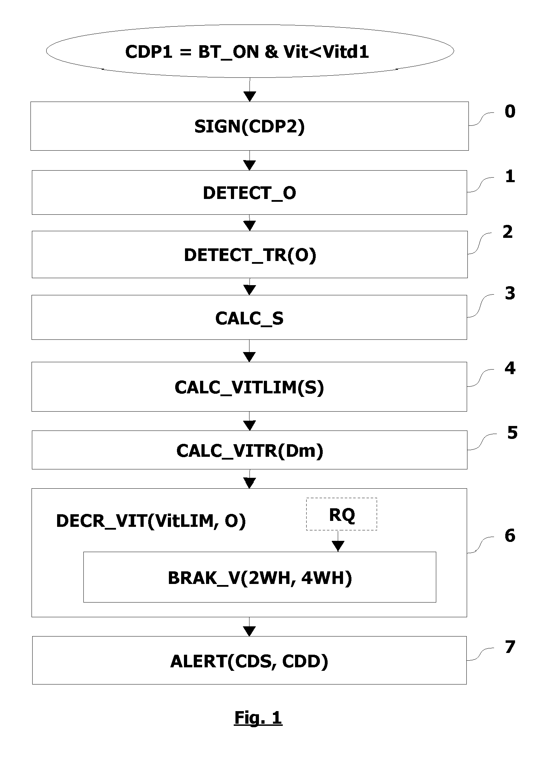

Le procédé d'assistance à la conduite pour véhicule automobile, selon l'invention, est décrit dans un mode de réalisation non limitatif à la Fig. 1.

Par véhicule automobile, on entend tout véhicule comprenant un moteur.

Le procédé d'assistance comporte les étapes suivantes telles qu'illustrées à la Fig 1 :

- détecter un obstacle O se trouvant dans un environnement du véhicule automobile V (étape DETECT_O) ;
- calculer la pente S d'une route R sur laquelle le véhicule automobile V est apte à circuler (étape CALC_S) ;
- en fonction de la pente S de la route R calculée, déterminer une vitesse limite VitLIM au-delà de laquelle le véhicule automobile V touche ledit obstacle O (étape CALC_VITLIM(S)) ; et
- si un obstacle O est détecté, réduire automatiquement la vitesse Vit du véhicule automobile V lorsqu'elle est supérieure à ladite vitesse limite VitLIM (étape DECR_VIT(VitLIM, O)).

Dans un mode de réalisation non limitatif, les étapes précédentes permettant de mettre en oeuvre une fonction d'assistance à la conduite sont exécutées si des premières conditions préalables CDP1 sont remplies. Cela permet d'éviter de rendre disponible ladite fonction d'assistance quand on sait pertinemment qu'elle ne pourra pas fonctionner.

Dans un mode de réalisation non limitatif, ces premières conditions préalables CDP1 sont :

- une demande d'assistance à la conduite par un utilisateur du véhicule automobile V ; et

- une vitesse Vit véhicule automobile V inférieure à une première vitesse maximum Vitd1.

Dans un exemple non limitatif, la première vitesse maximum Vitd1 est de 20 km/h.

Au-delà de cette valeur, on estime que l'assistance à la conduite ne peut pas fonctionner.

Dans un mode de réalisation non limitatif, le procédé d'assistance à la conduite comporte en outre une étape supplémentaire de déterminer si l'obstacle O détecté se situe sur la trajectoire (TR) du véhicule automobile V (étape DETECT_TR(O) illustrée à la Fig. 1).

Dans un mode de réalisation non limitatif, le procédé d'assistance à la conduite comporte en outre une étape supplémentaire de calculer une vitesse relative VitR du véhicule automobile V par rapport à l'obstacle détecté O (étape CALC_VITR(Dm) illustrée à la Fig. 1).

Dans un mode de réalisation non limitatif, le procédé comporte en outre une étape supplémentaire d'activer un témoin de disponibilité SIGN pour signaler qu'une fonction d'assistance à la conduite est disponible/ indisponible (étape SIGN(CDP2) illustrée à la Fig. 1).

Pour la suite de la description, dans le mode de réalisation non limitatif décrit, le procédé comprend les étapes supplémentaires ci-dessus.

Les étapes du procédé sont décrites en détail ci-après.

**Dans une étape initiale 0)**, on active le témoin de disponibilité SIGN pour signaler qu'une fonction d'assistance à la conduite est disponible/indisponible.

Dans un mode de réalisation non limitatif, l'activation du témoin de disponibilité SIGN se fait en fonction de deuxièmes conditions préalables CDP2.

Ainsi, le témoin de disponibilité SIGN est activé pour signaler au conducteur du véhicule automobile V que l'assistance à la conduite est :

- indisponible lorsque les deuxièmes conditions préalables CDP2 ne sont pas remplies ; et
- disponible lorsque les deuxièmes conditions préalables CDP2 sont remplies.

Dans un mode de réalisation non limitatif, les deuxièmes conditions préalables CDP2 sont :

- une demande d'assistance à la conduite par le conducteur du véhicule automobile V ; et

- une vitesse Vit véhicule inférieure à une deuxième vitesse maximum Vitd2.

Dans des exemples non limitatifs, la deuxième vitesse maximum Vitd2 est de 6 km/h.

Ainsi, le fait d'avoir des deuxièmes conditions préalables CDP2 plus restrictives que les premières conditions préalables CDP1, notamment, le fait de choisir une deuxième vitesse maximum Vitd2 inférieure à la première vitesse maximum Vitd1, implique que l'on signale au conducteur que la fonction d'assistance à la conduite est indisponible alors qu'elle est disponible. Cela permet de responsabiliser le conducteur du véhicule automobile V sur sa conduite au-delà de la deuxième vitesse maximum Vitd2. Dans ce cas, le conducteur ne comptera pas sur la fonction d'assistance, bien qu'en fait concrètement elle pourra fonctionner jusqu'à la première vitesse maximum Vitd1.

Bien entendu, dans un autre mode de réalisation, l'activation du témoin de disponibilité SIGN peut se faire en fonction des premières conditions préalables CDP1 vues précédemment.

Dans un mode de réalisation non limitatif, ces deuxièmes conditions préalables CDP2 comprennent en outre :

- une pente S de la route < Sd, avec Sd une pente maximum, en marche arrière sur une pente descendante ; et
- une pente S de la route > Sd, en marche avant sur une pente descendante.

On notera que l'on a pris l'hypothèse que :

- la pente de la route est positive si le véhicule automobile V descend une pente en marche arrière (l'avant du véhicule pointe vers le haut de la pente) ; et
- la pente de la route est négative si le véhicule automobile V descend une pente en marche avant (l'avant du véhicule pointe vers le bas de la pente).

Ainsi, on applique une limite en descente (que le véhicule soit en marche avant ou en marche arrière).

Dans un exemple non limitatif, la pente maximum Sd est de 40%.

Au-delà de cette valeur, on estime que l'assistance à la conduite ne peut pas fonctionner. On notera que dans ce mode de réalisation, cette étape initiale 0) est exécutée après le calcul de la pente S (décrite plus loin dans la description).

**Dans une première étape 1),** on détecte un obstacle O se trouvant dans un environnement du véhicule automobile V.

Dans un exemple non limitatif, l'environnement du véhicule automobile V est l'environnement avant dudit véhicule automobile V.

Dans un mode de réalisation non limitatif, la détection d'obstacle O est effectuée au moyen de capteurs à ultrasons CAPTU. On notera que ces capteurs ont en général une portée de 2 mètres environ contrairement à des capteurs de détection tels que des lidars ou radars qui ont une portée plus grande.

Des méthodes utilisant des capteurs de détection à ultrasons CAPTU étant bien connues de l'homme du métier, elles ne sont donc pas décrites ici.

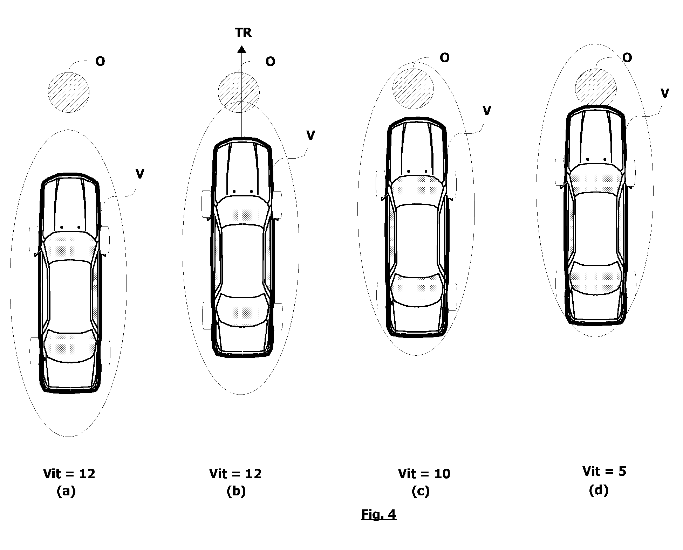

Ainsi, dans l'exemple non limitatif de la Fig. 4, un obstacle O est détecté dans l'environnement avant du véhicule automobile V tel qu'illustré à la Fig. 4, dans la situation (b), la vitesse véhicule Vit étant de 12 km/h.

Si un obstacle O est détecté, on effectue les étapes suivantes, sinon on revient à l'étape initiale 0).

On notera que cette première étape de détection peut être effectuée parallèlement aux troisième et quatrième étapes de calcul de pente et de calcul de vitesse limite VitLIM décrites plus loin.

**Dans une deuxième étape 2),** on détermine si l'obstacle détecté O se situe sur la trajectoire TR du véhicule automobile V.

S'il se situe la trajectoire TR du véhicule automobile V, on effectue les étapes suivantes, sinon on revient à l'étape initiale 0).

Ainsi, dans l'exemple non limitatif de la Fig. 4, on a déterminé que l'obstacle O se trouve bien dans la trajectoire TR du véhicule automobile V, tel qu'illustré à la Fig. 4, dans la situation (b).

Des méthodes de détermination d'un obstacle O sur la trajectoire d'un véhicule automobile V sont bien connues de l'homme du métier et ne sont donc pas décrites ici.

**Dans une troisième étape 3)**, on calcule la pente S d'une route R sur laquelle le véhicule automobile V circule.

Dans un mode de réalisation non limitatif, le calcul de pente S de la route R s'effectue au moyen d'une différence entre :

- un signal issu d'un accéléromètre

- une décélération calculée via un capteur de roue.

Ainsi, en considérant des vitesses Vit véhicule faibles (les forces aérodynamiques sont négligées) et une force de roulement négligée, la force Fp due à la pente S peut être approximée de la manière suivante.

$$Fp = 0.01.m.g.\sin(S)$$

avec m la masse du véhicule automobile V et g la constante de gravité.

$$Fp = Fi - Ff,$$

avec Ff la force due au freinage du véhicule automobile V, et Fi la force due à l'inertie du véhicule automobile V.

Par ailleurs, on a Fi = m.Vdl, avec avec Vdl la mesure de l'accéléromètre.

En phase d'accélération, on a :

$$Fp = Fi - Fm,$$

avec Fm la force due au couple moteur.

On notera que la force d'inertie Fi est mesurée par l'accéléromètre situé dans le véhicule automobile V et qui est dans un exemple non limitatif longitudinal.

Les forces Fm ou Ff génèrent une accélération ou décélération de la roue mesurée par les variations de vitesse de roue.

Par ailleurs, on a Ff (ou Fm) = Vdcr (en rd/$S^2$).J / r

avec J l'inertie de la roue ;

r le rayon de la roue ; et

Vdcr la mesure du capteur de roue.

On a donc le calcul de la pente S suivant :

$$S = 10.k1.Vdl - Vdcr.k2.10.J / (m. r)$$

avec les coefficients k1 et k2 proches de 1 et déterminés de façon empirique.

Dans un exemple non limitatif, pour déterminer le coefficient k1, on se met à l'arrêt sur une pente de 15%. A ce moment, la valeur de Vdcr égale zéro, et on mesure la valeur de Vdl. Le coefficient k1 est ajusté pour obtenir une pente S égale à 15%.

Dans un exemple non limitatif, pour déterminer le coefficient k2, on se met dans une situation de freinage sur une pente nulle. A ce moment, on mesure les valeurs de Vdl et Vdcr. Le coefficient k2 est ajusté pour obtenir une pente S nulle.

Bien entendu, d'autres modes de réalisation de calcul de pente peuvent être pris en compte.

Par ailleurs, dans un mode de réalisation non limitatif, si les conditions suivantes sur la pente S sont remplies, alors on effectue la quatrième étape, sinon on revient à l'étape initiale 0) :

- une pente S de la route < Sd, avec Sd une pente maximum, en marche arrière sur une pente descendante ; et
- une pente S de la route > Sd, en marche avant sur une pente descendante.

On notera que l'on a pris l'hypothèse que :

- la pente de la route est positive si le véhicule automobile V descend une pente en marche arrière (l'avant du véhicule pointe vers le haut de la pente) ; et
- la pente de la route est négative si le véhicule automobile V descend une pente en marche avant (l'avant du véhicule pointe vers le bas de la pente).

Ainsi, on applique une limite en descente (que le véhicule soit en marche avant ou en marche arrière).

Dans un exemple non limitatif, la pente maximum Sd est de 40%.

Au-delà de cette valeur, on estime que l'assistance à la conduite ne peut pas fonctionner.

**Dans une quatrième étape 4),** en fonction de la pente S de la route R calculée, on détermine une vitesse limite VitLIM au-delà de laquelle le véhicule automobile V touche ledit obstacle O.

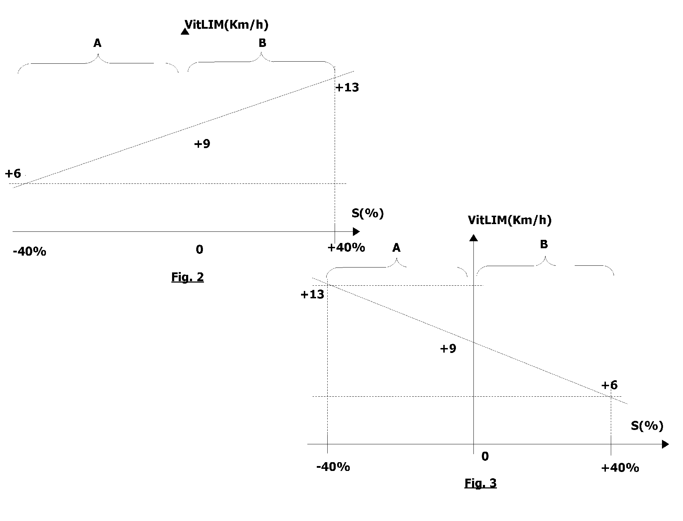

La Fig. 2 illustre une vitesse limite VitLIM en km/h (en ordonnée) en fonction de la pente S en pourcent (en abscisse) lorsque le véhicule automobile V avance sur la route R sur laquelle il circule.

On peut voir que :

- lorsque la pente S est de 40%, la vitesse limite VitLIM est égale à 13 km/h (partie B du diagramme). Nous sommes dans le cas où la route R est ascendante et le véhicule automobile V est freiné naturellement par la pente S.
- lorsque la pente S est de -40%, la vitesse limite VitLIM est égale à 6 km/h (partie A du diagramme). Nous sommes dans le cas où la route R est descendante et le véhicule automobile V est entraîné naturellement par la pente S.

La Fig. 3 illustre une vitesse limite VitLIM en km/h (en ordonnée) en fonction de la pente S en degré (en abscisse) lorsque le véhicule automobile V recule sur la route R sur laquelle il circule. On peut voir que :

- lorsque la pente S est de -40%, la vitesse limite VitLIM est égale à 13 km/h (partie A du diagramme). Nous sommes dans le cas où la route R est descendante et le véhicule automobile V est freiné naturellement par la pente S.

- lorsque la pente S est de +40%, la vitesse limite VitLIM est égale à 6 km/h (partie B du diagramme). Nous sommes dans le cas où la route R est ascendante et le véhicule automobile V est entraîné naturellement par la pente S.

Ainsi, en fonction de ces deux diagrammes, on peut déterminer la vitesse limite VitLIM au-delà de laquelle on touche l'obstacle O.

On notera que ces valeurs de vitesse sont déterminées de façon empirique. Par exemple, ces valeurs sont déterminées en se mettant sur des pentes dont la valeur de pente est connue et en activant la fonction d'assistance à la conduite. On détermine ainsi jusqu'à quelle vitesse la fonction reste efficace. Bien entendu, ces valeurs dépendent de chaque type de véhicule automobile utilisé.

On notera également que la valeur de 6 km/h est prise dans un exemple non limitatif où il existe par ailleurs un autre système de freinage automatique qui est actif tel que le frein moteur. Dans le cas contraire, on peut prendre une vitesse de 2 ou 3 km/h dans un exemple non limitatif.

**Dans une cinquième étape 5),** on calcule la vitesse relative VitR du véhicule automobile V par rapport à l'obstacle O détecté.

Cela permet de déterminer si le véhicule automobile se rapproche de l'obstacle détecté O ou non.

Dans un mode de réalisation non limitatif, le calcul de la vitesse relative VitR s'effectue en observant la distance Dm à l'obstacle O du véhicule automobile V. Lorsque cette distance Dm diminue, le véhicule se rapproche de l'obstacle O, la vitesse relative VitR devient négative. Dans le cas contraire, soit elle est nulle (la distance Dm est constante), soit elle est positive (la distance Dm augmente, l'obstacle O s'éloigne).

Ainsi, dans l'exemple non limitatif de la Fig. 4, grâce à la vitesse relative VitR, on confirme qu'un obstacle O se trouve bien dans l'environnement avant du véhicule automobile V et que le véhicule s'est rapproché de lui, tel qu'illustré à la Fig. 4, dans la situation (c).

Ainsi, dans un mode de réalisation non limitatif, si la vitesse relative VitR est inférieure à un premier seuil de vitesse S1, alors on effectue la sixième étape, sinon on revient à l'étape initiale 0).

Dans une première variante non limitative, le premier seuil de vitesse S1 est égal à zéro.

Dans une deuxième variante non limitative, le premier seuil de vitesse S1 est inférieur à zéro, par exemple égal à -0,5. Cette deuxième variante va permettre de prendre en compte une sous-étape d'envoi d'une requête minimale de freinage comme décrit ci-après.

**Dans une sixième étape 6),** si un obstacle O est détecté, on réduit automatiquement la vitesse Vit du véhicule automobile V lorsqu'elle est supérieure à ladite vitesse limite VitLIM.

Dans un mode de réalisation non limitatif, la réduction automatique de la vitesse du véhicule automobile V s'effectue par un freinage autonome. Le freinage autonome évite à un conducteur du véhicule automobile V de devoir freiner lui-même avec une pédale de frein.

Dans des exemples de réalisation non limitatifs, le freinage peut être hydraulique, électro-hydraulique ou encore électrique.

Dans une variante de réalisation non limitative, la réduction automatique de la vitesse du véhicule automobile V comporte une sous-étape préalable d'envoi d'une requête minimale de freinage RQ pour accélérer un déclenchement du freinage.

La requête minimale de freinage RQ est envoyée au moyen d'une commande de freinage envoyée par une unité de contrôle UC.

Dans le cas d'un freinage hydraulique ou électro-hydraulique, la commande de freinage est envoyée à une pompe ABS située dans un modulateur ESC en anglais « Electronic Stability Control » afin de réduire le temps de réponse hydraulique des freins, en remplissant les étriers de freins avec du liquide de frein de façon anticipée, ce qui instaure une pression hydraulique dans les freins qui sont alors « pré-chargés ». La pompe ABS permet de générer/ enlever de la pression dans les freins du véhicule automobile V en coopérant avec un modulateur hydraulique compris dans le modulateur ESC, ce qui entraîne un rapprochement des étriers de frein du disque de frein.

Le fonctionnement d'un modulateur ESC étant connu de l'homme du métier, il ne sera pas décrit ici.

Cette fonction de pré-remplissage de pression des freins du véhicule automobile V est couramment appelée en anglais « Brake Pre-fill ». Dans un exemple de réalisation non limitatif, cette requête minimale de freinage RQ permet d'augmenter la pression des freins de un ou deux bars.

Dans le cas d'un freinage électrique, la commande de freinage est envoyée à un moteur électrique de frein MB pour rapprocher les étriers de frein du disque de frein.

On notera que cette requête minimale de freinage RQ est effectuée avant que la réduction de la vitesse automatique ne soit exécutée.

Dans un mode de réalisation non limitatif, la requête minimale de freinage RQ est envoyée avant que la réduction automatique de la vitesse ne soit exécutée, lorsque la vitesse relative VitR (calculée précédemment) est inférieure à un deuxième seuil de vitesse S2, ce deuxième seuil de vitesse S2 étant supérieur au premier seuil de vitesse S1 décrit précédemment.

Dans un exemple non limitatif, ce deuxième seuil de vitesse S2 est égal à zéro et le premier seuil de vitesse S1 est négatif et égal à -0,5 comme décrit précédemment. Si la vitesse relative VitR est inférieure à zéro dans ce cas la requête de freinage RQ est envoyée, et dès que la vitesse relative VitR devient inférieure à - 0,5, alors la réduction automatique de la vitesse est exécutée.

Ainsi, cela permet :

- de diminuer le temps de réaction des freins et d'augmenter l'efficacité de l'assistance à la conduite ;

- d'anticiper le freinage qui va suivre pour avoir un freinage plus rapide ; et

- de rendre plus confortable le freinage pour un conducteur du véhicule automobile V car le freinage sera moins ressenti par le conducteur car anticipé.

Dans une variante de réalisation non limitative, le freinage autonome s'effectue sur deux ou quatre roues (étape BRAK_V(2WH, 4WH) illustré à la Fig. 1).

Le choix de deux ou quatre roues peut se faire, selon des exemples non limitatifs, en fonction de :

- la vitesse Vit du véhicule automobile V (par exemple, si elle est inférieure à 5 km/h, un freinage sur deux roues suffit) ;

- si la boîte d'embrayage est débrayée (on n'a besoin de moins de frein, donc deux roues suffisent) ou embrayée (il est nécessaire d'avoir plus de frein pour caler le moteur de frein, donc quatre roues sont nécessaires) ;

- l'usure des freins (par exemple, si les freins sont neufs, le coefficient d'adhérence de la route est faible, il faut donc freiner plus et quatre roues sont donc nécessaires) ;

- la pente S de la route dans le sens du déplacement du véhicule automobile V (deux roues suffisent) sinon quatre roues sont nécessaires etc.

Bien entendu, les critères décrits ci-dessus peuvent être combinés entre eux.

Bien entendu, lors du freinage, on peut également choisir de passer de l'un (choix de deux roues) à l'autre mode (choix de quatre roues) ou vice et versa. Dans un exemple de réalisation non limitatif, on choisira de passer d'un freinage sur deux roues à un freinage sur quatre roues si on s'aperçoit que le coefficient d'adhérence de la route est trop faible (les roues se bloquent).

Par ailleurs, lorsque l'on choisit de freiner sur deux roues, le choix peut se porter sur les roues arrière ou sur les roues avant en fonction du potentiel de freinage des roues, c'est-à-dire, suivant la charge normale sur les roues. Dans des exemples non limitatifs, on effectue un freinage sur :

- les roues arrière si le véhicule automobile V roule en marche arrière. Dans ce cas, les roues arrières ont une charge normale plus importante tandis que les roues avant sont les plus délestées. Il y a donc moins de potentiel de freinage sur un axe opposé à la direction de la marche, ici sur les roues avant.

- les roues avant si le véhicule automobile V roule en marche avant.

Ainsi, cette étape de réduction automatique de la vitesse du véhicule automobile V permet de réduire l'énergie cinétique du véhicule automobile V avant de heurter un obstacle O.

Ainsi, dans l'exemple non limitatif de la Fig. 4, un impact a eu lieu entre le véhicule automobile V et l'obstacle O, mais cet impact est réduit car la vitesse Vit du véhicule automobile V a été réduite au préalable de 7 km/h et est passée de 12 km/h à 5 km/h, tel qu'illustré à la Fig. 4, dans la situation (d). Il y a donc une réduction d'énergie d'environ 80% dans cet exemple non limitatif.

Enfin, lorsque le véhicule automobile V a heurté l'obstacle O, on relâche alors les freins. Dans un mode de réalisation non limitatif, on relâche les freins au bout d'un temps prédéterminé TP, de l'ordre de 0,5 sec par exemple. On notera que l'on sait que le véhicule automobile V a heurté l'obstacle O quand, par exemple, la distance Dm à l'obstacle O est très faible, par exemple de l'ordre de 10 cm.

Dans un mode de réalisation non limitatif, on peut prévoir également d'actionner automatiquement le frein de parking électrique, après le freinage autonome, si la pente S de la route est supérieure à 2% ou 3%, par exemple et si le véhicule automobile est arrêté.

**Dans une septième étape 7),** lorsque la réduction automatique de vitesse est en cours d'exécution, on active une fonction d'alerte ALERT qui génère différents niveaux d'alerte (étape ALERT(CDS, CDD) telle illustrée à la Fig. 1.

Dans un premier mode de réalisation, la fonction d'alerte ALERT génère un premier niveau d'alerte lorsque des conditions de sécurité CDS sont atteintes.

Dans une variante de réalisation non limitative, les conditions de sécurité CDS sont :

- une vitesse véhicule Vit comprise dans un premier intervalle de vitesses permettant de stopper le véhicule automobile V sans heurter un obstacle O détecté. Dans un exemple non limitatif, l'intervalle se situe entre 3 et 7 km/h ; et
- l'observation de paramètres internes de contrôle PIC prévoyant un danger potentiel de heurter l'obstacle O ; ainsi, la fonction d'alerte ALERT averti le conducteur afin que celui-ci puisse augmenter la requête de freinage au pied via la pédale de frein en sus de la réduction automatique de la vitesse véhicule Vit.

Dans un exemple non limitatif, les paramètres internes de contrôle PIC sont :

- une distance prédite Dp d'obstacle O évaluée en fonction de l'accélération/décélération du véhicule automobile V. Dans un exemple non limitatif, on a Dp = Vit$^2$ / (2 x décélération), la Vit$^2$ s'exprimant en m/s ;
- une distance mesurée Dm d'obstacle O ; et
- la vitesse Vit du véhicule automobile V.

En comparant la distance prédite Dp d'obstacle O et la distance réelle Dm d'obstacle O, et en fonction de la vitesse Vit du véhicule automobile V, on détermine si un danger est imminent (le fait de toucher l'obstacle O ou non).

Ainsi, par exemple si la différence D_DIFF = Dp - Dm est négative, alors on peut prévoir qu'il n'y a pas de risque de toucher l'obstacle O.

Dans le cas contraire, si la différence D_DIFF = Dp - Dm est positive, alors on peut prévoir qu'il y a un risque de toucher l'obstacle O.

Dans un deuxième mode de réalisation, la fonction d'alerte ALERT génère un deuxième niveau d'alerte lorsque des conditions de dangerosité CDD sont atteintes.

Dans une variante de réalisation non limitative, les conditions de dangerosité CDD sont :

- une vitesse véhicule Vit comprise dans un deuxième intervalle de vitesses ne permettant pas de stopper le véhicule automobile V sans heurter un obstacle O détecté. Dans un exemple non limitatif, l'intervalle se situe entre 7 et 20 km/h ; et

- l'observation des paramètres internes de contrôle, décrits ci-dessus, prévoyant un danger de heurter l'obstacle O.

Dans ce cas, l'assistance à la conduite fait diminuer la vitesse du véhicule automobile V mais l'obstacle O sera heurté avant que le véhicule automobile V ne s'arrête.

Bien entendu, ces deux modes de réalisation sont utilisées en combinaison.

Ainsi, le procédé décrit permet de réduire les dommages causés à un obstacle en cas de collision en réduisant la vitesse du véhicule automobile avant que la collision ne survienne et ce lorsque le véhicule automobile roule à basse vitesse, entre 1 km/h et 20 km/h. En pratique, l'assistance à la conduite décrite ci-dessus sera utilisée, dans des exemples non limitatifs, dans les situations suivantes :

- lorsque le véhicule automobile sera dans une situation de démarrage ;
- lorsque le véhicule automobile sera dans une situation de marche arrière ;

- lorsque le véhicule automobile se trouvera dans des embouteillages.

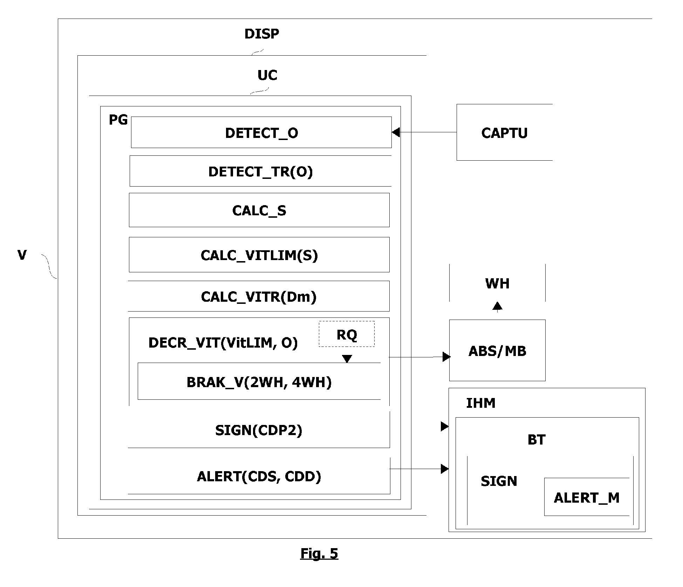

Le procédé de l'invention est mis en oeuvre par un dispositif DISP d'assistance à la conduite pour véhicule automobile V, représenté à la Fig. 5.

Ce dispositif DISP est intégré dans le véhicule automobile V.

Ce dispositif DISP comporte notamment une unité de contrôle UC pour :

- détecter un obstacle O se trouvant dans un environnement du véhicule automobile V ;
- calculer la pente S d'une route R sur laquelle le véhicule automobile V est apte à circuler ;
- en fonction de la pente S de la route R calculée, déterminer une vitesse limite VitLIM au-delà de laquelle le véhicule automobile V touche un obstacle O ; et
- si un obstacle O est détecté, réduire automatiquement la vitesse Vit du véhicule automobile V lorsqu'elle est supérieure à ladite vitesse limite VitLIM.

Dans des modes de réalisation non limitatifs, l'unité de contrôle UC permet en outre :

- de contrôler l'envoi d'une requête minimale de freinage RQ pour accélérer un déclenchement du freinage. Il le fait via la pompe ABS ou du moteur électrique de frein MB comme décrit précédemment ;

- d'activer le témoin de disponibilité SIGN à la conduite pour signaler qu'une fonction d'assistance à la conduite est disponible/indisponible ; et

- d'activer la fonction d'alerte ALERT pour générer :

  - un premier niveau d'alerte lorsque des conditions de sécurité CDS sont atteintes ;

  - un deuxième niveau d'alerte lorsque des conditions de dangerosité CDD sont atteintes.

Par ailleurs, le dispositif DISP coopère avec une interface homme/machine IHM comportant :

- des moyens d'activation BT de la fonction d'assistance à la conduite. Dans un exemple non limitatif, ces moyens d'activation BT sont un bouton poussoir que le conducteur du véhicule automobile V peut enfoncer pour demander à ce que la fonction d'assistance à la conduite soit disponible (BT_ON) ;
- le témoin de disponibilité SIGN décrit précédemment. Dans un exemple non limitatif, le témoin de disponibilité SIGN est un voyant lumineux avec une couleur différente associée selon la disponibilité ou l'indisponibilité de la fonction d'assistance à la conduite ;
- des moyens d'alerte ALERT_M qui sont notamment aptes à, lorsque la réduction automatique de vitesse est en cours d'exécution,

  - générer un premier niveau d'alerte lorsque des conditions de sécurité CDS sont atteintes telles que décrites précédemment ; et
  - générer un deuxième niveau d'alerte lorsque des conditions de dangerosité CDD sont atteintes telles que décrites précédemment.

Ces moyens d'alerte ALERT sont, dans un exemple non limitatif, un voyant lumineux avec une fréquence de clignotement associée selon le type de niveau d'alerte émis.

Ces moyens d'alerte ALERT_M peuvent bien entendu être intégrés au témoin de disponibilité SIGN qui peut lui-même être intégré aux moyens d'activation BT, comme illustré à la Fig. 5.

On notera que la mise en oeuvre du procédé d'assistance exposé ci-dessus peut être effectuée au moyen d'un dispositif micro programmé « software », d'une logique câblée et/ou de composants électroniques « hardware ».

Ainsi, le dispositif d'assistance DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 5, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus.

Ainsi, au lieu du freinage principal (hydraulique, électro-hydraulique ou électrique), dans un autre mode de réalisation non limitatif, on peut prévoir que la réduction automatique de la vitesse du véhicule automobile V s'effectue par un freinage secondaire autonome EPB. Dans un exemple de réalisation non limitatif, le freinage secondaire est un frein de parking électrique couramment appelé en anglais « Electric Park Brake ». On notera que dans ce mode de réalisation, le freinage s'effectue sur deux roues et est plus lent à réagir que le freinage principal, car il est en général utilisé lorsque le véhicule automobile V est en position de stationnement pour immobiliser le véhicule automobile V en stationnement. De plus, il ne s'applique que pour des faibles vitesses de l'ordre de 2 à 3 km/h.

Par ailleurs, le procédé d'assistance à la conduite peut être combiné à un procédé d'assistance à la conduite classique utilisé pour des situations de stationnement. Dans ce cas, on pourra prévoir que la fonction d'alerte ALERT génère un troisième niveau d'alerte lorsque des conditions de roulage CDR sont atteintes telle que, dans un exemple non limitatif, une vitesse véhicule Vit comprise dans un intervalle de vitesses permettant de stopper le véhicule automobile V sans heurter un obstacle O détecté. Dans un exemple non limitatif, l'intervalle se situe entre 1 et 7 km/h.

On peut prévoir d'effectuer en outre la réduction automatique de la vitesse Vit du véhicule automobile V que lorsque la vitesse véhicule Vit est supérieure à une vitesse minimale Vitd3. Cela permet de vérifier si l'on se trouve dans une situation critique ou non. En effet, si le véhicule automobile roule à une très faible vitesse Vit, par exemple de 0,5km/h, la situation n'est pas critique.

Enfin, dans un mode de réalisation non limitatif, on peut prévoir de désactiver les capteurs à ultrasons CAPTU lorsque la vitesse du véhicule automobile V est supérieure à une vitesse seuil, par exemple de 40 km/h. En effet, dans ce cas, les capteurs à ultrasons CAPTU sont inutilisables. Cela permet de réduire l'usure desdits capteurs.

Ainsi, l'invention présente notamment les avantages suivants:

- Elle permet de limiter les effets d'une collision avec un obstacle en réduisant l'énergie cinétique du véhicule automobile (via la réduction de sa vitesse) avant l'impact ;
- Elle est simple à mettre en oeuvre et s'applique à tous systèmes de freinage y compris électriques ;
- Elle permet d'utiliser des capteurs à ultrasons, couramment utilisés lors de freinage en stationnement, et ce pour des vitesses plus élevées que dans les cas de stationnement ;
- Elle permet d'accélérer le temps de réaction du freinage grâce à l'envoi de la requête minimale de freinage ;
- Elle permet d'adopter une stratégie de freinage sur deux ou quatre roues ;
- Elle permet de signaler au conducteur du véhicule automobile si la fonction d'assistance à la conduite est disponibilité/ indisponibilité ; et
- Elle permet d'alerter le conducteur du véhicule automobile de façon adéquate, grâce aux différents niveaux d'alerte émis, lorsque la réduction automatique de la vitesse est en cours d'exécution, selon que des conditions de sécurité ou de dangerosité sont atteintes.

**Revendications**

1. Procédé d'assistance à la conduite pour véhicule automobile (V) comprenant les étapes de :

    - détecter un obstacle (O) se trouvant dans un environnement du véhicule automobile (V) ;
    - calculer la pente (S) d'une route sur laquelle le véhicule automobile (V) est apte à circuler ;
    - en fonction de la pente (S) de la route calculée, déterminer une vitesse limite (VitLIM) jusqu'à laquelle l'assistance à la conduite est efficace, le véhicule automobile (V) touchant ledit obstacle (O) au-delà de cette vitesse limite; et
    - si un obstacle (O) est détecté, réduire automatiquement la vitesse (Vit) du véhicule automobile (V) lorsqu'elle est supérieure à ladite vitesse limite (VitLIM).

2. Procédé d'assistance selon la revendication 1, selon lequel ledit procédé d'assistance fonctionne lorsque la vitesse (Vit) du véhicule automobile (V) est comprise entre 7 et 20 km/h.

3. Procédé d'assistance selon la revendication 1 ou 2, selon lequel ledit procédé réduit la vitesse du véhicule sans permettre l'arrêt du véhicule avant l'obstacle.

4. Procédé d'assistance selon l'une des revendications précédentes, selon lequel les étapes sont exécutées si des premières conditions préalables (CDP1) sont remplies.

5. Procédé d'assistance selon l'une des revendications précédentes, selon lequel la détection d'un obstacle (O) s'effectue au moyen de capteurs de détection à ultrasons (CAPTU).

6. Procédé d'assistance selon l'une des revendications précédentes, selon lequel il comporte en outre une étape supplémentaire de déterminer si l'obstacle détecté (O) se situe sur la trajectoire (TR) du véhicule automobile (V).

7. Procédé d'assistance selon l'une des revendications précédentes, selon lequel il comporte en outre une étape supplémentaire de calculer une vitesse relative (VitR) du véhicule automobile (V) par rapport à l'obstacle détecté (O).

8. Procédé d'assistance selon la revendication précédente, selon lequel la réduction automatique de la vitesse (Vit) du véhicule automobile (V) s'effectue par un freinage autonome, la réduction automatique de la vitesse (Vit) du véhicule automobile (V) comportant une sous-étape d'envoi d'une requête minimale de freinage (RQ) pour accélérer un déclenchement du freinage.

9. Procédé d'assistance selon lequel la réduction automatique de la vitesse (Vit) du véhicule automobile (V) s'effectue par un freinage autonome, le freinage étant effectué sur deux ou quatre roues.

10. Procédé d'assistance selon l'une des revendications précédentes, selon lequel il comporte en outre une étape supplémentaire d'activer un témoin de disponibilité (SIGN) pour signaler qu'une fonction d'assistance à la conduite est disponible/indisponible.

11. Procédé d'assistance selon la revendication précédente, selon lequel l'activation du témoin de disponibilité (SIGN) se fait en fonction de deuxièmes conditions préalables (CDP2).

12. Procédé d'assistance selon l'une des revendications précédentes, selon lequel il comporte en outre une étape supplémentaire d'activer une fonction d'alerte (ALERT) qui génère un premier niveau d'alerte lorsque des conditions de sécurité (CDS) sont atteintes.

13. Procédé d'assistance selon l'une des revendications précédentes, selon lequel il comporte en outre une étape supplémentaire d'activer une fonction d'alerte (ALERT) qui génère un deuxième niveau d'alerte lorsque des conditions de dangerosité (CDD) sont atteintes.

14. Dispositif (DISP) d'assistance à la conduite pour véhicule automobile (V), **caractérisé en ce qu'**il comporte une unité de contrôle (UC) pour :

- détecter un obstacle (O) se trouvant dans un environnement du véhicule automobile (V) ;
- calculer la pente (S) d'une route sur laquelle le véhicule automobile (V) est apte à circuler ;
- en fonction de la pente (S) de la route calculée, déterminer une vitesse limite (VitLIM) au-delà de laquelle le véhicule automobile (V) touche un obstacle (O) ; et
- si un obstacle est détecté, réduire automatiquement la vitesse du véhicule automobile (V) lorsqu'elle est supérieure à ladite vitesse limite (VitLIM).

15. Produit programme (PG) d'ordinateur comportant une ou plusieurs séquences d'instructions exécutables par une unité de traitement d'information, l'exécution desdites séquences d'instructions permettant une mise en oeuvre du procédé selon l'une quelconque des revendications précédentes 1 à 13.

CDP1 = BT_ON & Vit<Vitd1

SIGN(CDP2) — 0

DETECT_O — 1

DETECT_TR(O) — 2

CALC_S — 3

CALC_VITLIM(S) — 4

CALC_VITR(Dm) — 5

DECR_VIT(VitLIM, O)    RQ — 6

BRAK_V(2WH, 4WH)

ALERT(CDS, CDD) — 7

**Fig. 1**

VitLIM(Km/h)

A          B

+13

+9

+6

S(%)

-40%          0          +40%

**Fig. 2**

VitLIM(Km/h)

A          B

+13

+9

+6

S(%)

-40%          0          +40%

**Fig. 3**

TR

O                    O                    O                    O

V                    V                    V                    V

Vit = 12          Vit = 12          Vit = 10          Vit = 5
(a)               (b)               (c)               (d)

**Fig. 4**

DISP

UC

PG

| DETECT_O |
|---|

CAPTU

| DETECT_TR(O) |
|---|

| CALC_S |
|---|

| CALC_VITLIM(S) |
|---|

| CALC_VITR(Dm) |
|---|

WH

DECR_VIT(VitLIM, O)    RQ

ABS/MB

| BRAK_V(2WH, 4WH) |
|---|

IHM

| SIGN(CDP2) |
|---|

BT

| ALERT(CDS, CDD) |
|---|

SIGN

ALERT_M

V

**Fig. 5**

**Europäisches Patentamt**
**European Patent Office**
**Office européen des brevets**

## RAPPORT DE RECHERCHE EUROPEENNE

Numéro de la demande

EP 09 17 4015

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2004/215385 A1 (AIZAWA HIROAKI [JP] ET AL) 28 octobre 2004 (2004-10-28) | 1-4,6, 8-15 | INV. B60W40/10 B60T8/48 |
| Y | * alinéas [0064], [0067], [0070], [0111] - [0117]; revendications; figures * ----- | 5,7 | |
| A | US 2004/030497 A1 (KNOOP MICHAEL [DE] ET AL) 12 février 2004 (2004-02-12) * alinéas [0004] - [0029]; revendications; figures * ----- | 1-15 | |
| Y | US 2002/069010 A1 (NISHIRA HIKARU [JP] ET AL) 6 juin 2002 (2002-06-06) * alinéa [0076]; revendications; figures * ----- | 7 | |
| Y | JP 2000 326760 A (NISSAN MOTOR) 28 novembre 2000 (2000-11-28) * le document en entier * ----- | 5 | |
| A | JP 2006 044591 A (TOYOTA MOTOR CORP) 16 février 2006 (2006-02-16) * le document en entier * ----- | 1-15 | DOMAINES TECHNIQUES RECHERCHES (IPC) |
| A | EP 1 547 847 A (FUJI HEAVY IND LTD [JP]) 29 juin 2005 (2005-06-29) * alinéas [0005] - [0007]; revendications; figures * ----- | 1-15 | B60K B60T G08G B60W B60R |

Le présent rapport a été établi pour toutes les revendications

| Lieu de la recherche | Date d'achèvement de la recherche | Examinateur |
|---|---|---|
| La Haye | 4 février 2010 | Ducher, Alban |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 17 4015

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-02-2010

| Document brevet cité au rapport de recherche | | Date de publication | Membre(s) de la famille de brevet(s) | | Date de publication |
|---|---|---|---|---|---|
| US 2004215385 | A1 | 28-10-2004 | DE<br>JP<br>JP | 10339666 A1<br>4039184 B2<br>2004090679 A | 06-05-2004<br>30-01-2008<br>25-03-2004 |
| US 2004030497 | A1 | 12-02-2004 | WO<br>DE<br>EP<br>JP<br>JP | 03007271 A2<br>10231584 A1<br>1412930 A2<br>2004535031 T<br>2008150032 A | 23-01-2003<br>27-03-2003<br>28-04-2004<br>18-11-2004<br>03-07-2008 |
| US 2002069010 | A1 | 06-06-2002 | JP<br>JP | 3777970 B2<br>2002137652 A | 24-05-2006<br>14-05-2002 |
| JP 2000326760 | A | 28-11-2000 | JP | 3697943 B2 | 21-09-2005 |
| JP 2006044591 | A | 16-02-2006 | AUCUN | | |
| EP 1547847 | A | 29-06-2005 | JP<br>US | 2005186813 A<br>2005143895 A1 | 14-07-2005<br>30-06-2005 |

EPO FORM P0460

Pour tout renseignement concernant cette annexe : voir Journal Officiel de l'Office européen des brevets, No.12/82